# EUROPEAN PATENT SPECIFICATION

(11) **EP 3 851 891 B1**
(45) Date of publication and mention of the grant of the patent: **03.01.2024**
(21) Application number: 20020425.3
(22) Date of filing: 22.09.2020
(51) Int. Cl.: G02B 6/44, G02B 6/38

(54) **TERMINAL MODULE FOR FIBER OPTIC SPLICE CLOSURE**
ANSCHLUSSMODUL FÜR FASEROPTISCHEN SPLEISSVERSCHLUSS
MODULE DE TERMINAL POUR FERMETURE D'ÉPISSURE EN FIBRE OPTIQUE

(30) Priority: 14.01.2020 RU 2020100920
(43) Date of publication of application: 21.07.2021
(73) Proprietor: Aktsionernoe obshchestvo "Svyazstroydetal", Moscow 115088 (RU)
(72) Inventor: Kozlov, Anton Sergeevich, 141006 Moscow Oblast (RU); Saulov, Oleg Valerevich, 111558 Moscow (RU); Yudin, Mikhail Vladimirovich, 119634 Moscow (RU)
(74) Representative: Fortuna, Jevgenijs

(56) References cited:
- WO-A1-2018/197410

## Description

### Field of the Invention

This invention relates to splices and splitters intended to splice factory lengths of optical communication cables, tap cables to subscribers, and store splices of optical fibers in sealed enclosures of splice closures.

### Background Art

There are methods and systems for distributing fiber optic telecommunications services to a local area (WO 2009/155487, December 23, 2009) that disclose a fiber-optic distribution terminal containing a housing, several ruggedized adapters in the housing, wherein each adapter contains several ports. Access to these ports is possible both from outside and inside of the housing.

A fiber-optic distribution terminal is known, which contains a complete flattened housing with side walls and a bottom. The housing bottom provides through holes to arrange seats for ruggedized adapters. Each ruggedized adapter contains a port accessible from outside the housing and a port accessible from inside the housing. The terminal has a number of screwed connections of the cover with the terminal housing, which complicates installation (KZ 1298 U, July 15, 2015).

There is also a multiport terminal of the optical connection with a compact housing, the configuration of which allows for easy access and interrelations of cables thereby ensuring several installation options and including a space for storage inside the terminal. The terminal may contain cable connectors that are configured so that it ensures protection against atmospheric actions for installation of sealed fiber-optic cables with terminal ports (US 9039293 B2, May 26, 2015).

There are fiber distribution terminals (FDTs) to ensure selective connections between optical fibers of distribution cables and optical fibers of drop cables, for example, in several dwelling units. FDT assemblies contain a mounting plate that allows for convenient and reliable installation of the FDT on a vertical surface, for example, a wall. The mounting plate design is such that before removing the mounting plate, it is necessary to remove the FDT basis, and the FDT cover design is such that neither basis nor mounting plate can be removed without prior removal of the cover. The cover can be selectively attached to the basis and/or mounting plate using a retaining fastener; therefore, only those who can remove the fastener can remove the cover, basis, and/or mounting plate of the FDT assembly (US 7664360 B2, February 16, 2010).

There is a multi-layer module that comprises a layer for storage of the multi-fiber cable having a hole for cable lead-in and a structure for cable winding. It also contains a layer for splicing storage that is separate from the multi-layer cable storage level, wherein the splicing storage level has an intake hole for layer splicing, a layer communicating with the multi-fiber cable storage, and a zone for cable sag storage. The multi-layer module contains a storage layer for pigtails that is separate both from the multi-fiber cable storage layer and the connection storage layer, wherein the pigtail storage layer has an area of pigtail connection and an area of pigtail storage, and the pigtail storage area contains a hole for the intake of the pigtail storage layer communicating with the connection storage layer (EP 2383594 A1, November 2, 2011).

A solution similar to the one given in this description is a known fiber-optic distribution terminal containing a hollow housing with a horizontal cross-section similar in shape to a semi-circumference, the inner and outer side surfaces of which are made as wave-like surfaces enveloping the area of reinforced guiding adapters, the ends of which are located on seats in the housing cavity and other ends are located on seats made on the common protrusion of the outer surface of the housing bottom, and it also contains a removable cover with a sealing element installed between seats of the cover and housing, elements for attaching the cover to the housing, a cartridge to locate and fasten turns and splices of optical fibers installed in a hollow housing characterized in that the outer surface of the removable cover is made dome-shaped with a housing cavity divided into the mains cable inlet zone, the zone for fiber optic outlet from the mains cable, the splitter switching zone, the splitter storage zone, the cable reserve storage zone, and the splitter subscriber connection zone. Clip pins are removable and replaceable (RU 184781 U1, November 8, 2018).

The fiber-optic distribution module (terminal module) disclosed in patent RU 184781 U1 has a housing with a removable cover, wherein the outer surface of the cover is made dome-shaped and the formed cavity of the terminal housing is divided into the mains cable inlet zone, the zone for fiber optic outlet from the mains cable, the splitter switching zone, the splitter storage zone, the cable reserve storage zone, and the splitter subscriber connection zone. The housing is connected with the cover. A disadvantage of this distribution terminal is the installation of individual assemblies of cable inlet at a distance from each other, which results in increased dimensions of the distribution terminal.

Another solution similar to the one represented in this description is a known device for cable end sealing with several sealing modules disclosed in patent RU 2632929 C2 that, in accordance with the claims, represents a shell containing a housing, the end of which has a hole for the sealing unit that can be inserted into the hole and contains a sealing device with multiple cable ports, wherein the sealing unit also contains an actuating device that can compress the sealing device in the hole of the sealing unit and contains internal and external compressing elements with a sealing device located between them and a spring that compresses the sealing device between the inner and outer compressing elements when the actuating device is activated, wherein the shell is characterized in that the sealing device contains multiple sealing modules each forming a part of the actuating device activated by compression, wherein sealing modules can be individually installed between internal and external compressing elements and inserted from the space between these elements, wherein each sealing module has a common axial length formed between the first and second axial ends in the direction along the central axis of the sealing module and contains a volume of a sealant at least partially located between the first and second retaining structures that form the first and second axial ends of sealing modules each having at least one cable port going in the axial direction through the sealant volume containing cable sealing surfaces located around cable ports, wherein each sealant volume contains external sealing surfaces surrounding the perimeter of sealing modules, wherein the sealing device contains at least three sealing modules and parts of the outer sealing surface form a sealing along the perimeter between the housing and the sealing unit.

The second embodiment of the shell according to patent RU 2632929 C2 disclosed in the claims contains a housing with a hole in the housing going along the central axis and a sealing unit inserted in the direction along the central axis into the housing hole and containing a sealant ring located around the central axis of the hole when the sealing unit is inserted into the hole, wherein there is an actuating device with inner and outer axial compressing elements with a sealant ring pressed between them in the axial direction, which forms an outer radial sealing with an inner surface of the housing hole and an inner radial sealing with an outer part of the inner compressing element elongated in the axial direction, wherein the actuating device contains an actuator installed outside the housing and containing a driving shaft connected with the outer part of the inner compressing element elongated in the axial direction (RU 2632929 C2, October 11, 2017). This invention allowed for sealing the points of cable inlet of housings of telecommunication systems by inserting the sealing unit into the housing hole. The sealing unit contains a sealing device with multiple cable ports. The sealing device also provides a peripheral sealing between the housing and the sealing unit. The sealing unit contains an actuating device for compressing the sealing device in the hole of the sealing unit. The sealing device contains several sealing modules each being only a part of the sealing device activated by compression. The invention provides for multiple use of telecommunication housings.

A disadvantage of the device according to patent RU 2632929 C2 is that switching of cables to be connected is inside the device, which requires opening the housing during installation activities. This results in a significantly increased labor intensity of installation works when connecting additional consumers to the device.

There are also optical couplings each containing a hollow housing, a head connected with the housing in a sealed and removable manner where sleeves for inlet of distribution cables into the splice closure are located (RU 2552119 C2, June 10, 2015; RU 2683815 C1, April 2, 2019; JP 2002139634 A, May 17, 2002). In these sources, sleeves of heads can be round and oval, and sleeves of smaller diameters can be located on sleeves of larger diameters.

A solution similar to the one represented in this description is a fiber optic splice closure given in the description of patent RU 2683815 C1, April 2, 2019, G02B 6/44. This source discloses a design that has similar features with the one represented in this description. Common features for two structures are such that are related to fiber optic splice closures and each of them contains a hollow housing, a removable head connected with the housing in a detachable manner where sleeves for inlet of distribution cables into the splice closure are located.

There is also known a connection module for cable seal gel block (WO 2018/197410), comprising a housing, a volume of sealant that defines a port in communication with an interior of the housing, and a fiber optic connection module including a sleeve that mounts within the port with the volume of sealant forming a seal about an exterior of the sleeve; the sleeve includes an inner end adjacent the interior of the housing and an outer end outside the housing. The fiber optic connection module also includes a demateable fiber optic connection interface adjacent the outer end of the sleeve. The demateable fiber optic connection interface includes a fiber optic connector.

As the practice showed, to inlet new subscriber cable entries into the splice closure, multiple operations are required to connect these subscribers, and it is impossible to connect these subscriber cables without opening the splice closure, and such opening operation is associated with significant installation efforts.

### Summary of the Invention

A technical result of the invention is reducing the labor intensity of installation activities.

The technical result was obtained by the terminal modules according to claims 1 and 3, and the fiber optic splice closure according to claim 5.

The represented description and diagrams give one of the embodiments of the fiber optic splice closure having a head closed by the housing, with optical elements of the splice closure located on the head. Such splice closures of external application operate in heavy atmospheric conditions, they are predominantly secured on power line poles and other bearing elements of building structures.

### Brief Description of Drawings

Fig. 1 shows an overview of the fiber optic splice closure with terminal modules to inlet cables into the splice closure housing.
Fig. 2 - exploded view of the fiber optic splice closure.
Fig. 3 - exploded view of the splice closure head and terminal modules.
Fig. 4 - splice closure head and terminal modules assembled, with an image of the blank in one of the head holes.
Fig. 5 - exploded view of the terminal module, head, and blank.
Fig. 6 - view of terminal modules of the splice closure closed by covers of housings of terminal modules with subscriber cables inserted into the modules.
Fig. 7 - view of the splice closure head with terminal modules on the inner side of the head with connected plugs and cables.
Fig. 8 - terminal module of the splice closure with the module housing basis and one rotary cover of the module.
Fig. 9 - view of the terminal module of the splice closure with two opened rotary covers of the module.
Fig. 10 - rear view of the terminal module with closed covers.
Fig. 11 - view of the terminal module with closed covers.
Fig. 12 - module housing with optical adapters installed in its sleeve.
Fig. 13 - view of the splice closure head with the lower terminal module installed into it with two opened covers and the upper module installed in the head at the front with one opened cover of the upper module, and with optical connectors and cables installed in the housing of each module.
Fig. 14 - enlarged view of place A in Fig. 13.
Fig. 15 - exploded view of the terminal module in the position of connection of its elements with optical connectors assembled and with cables.
Fig. 16 - view of the terminal module with connected optical connectors assembled with cables and opened covers of the module housing.
Fig. 17 - view of the terminal module with connected optical subscriber cables and closed covers of the housing.
Fig. 18 - front view of the terminal module with closed covers, with connected subscriber cables and with plugs located inside the splice closure housing connected with the splice closure optical cables.
Fig. 19 - view of the terminal module assembled with a multiport adapter of the optical connector.
Fig. 20 - first embodiment of the module housing (covers removed).
Fig. 21 - second embodiment of the module housing (cover removed).
Fig. 22 - filling shapes of the internal cavity of sleeves of the module housing, rear view.
Fig. 23 - filling shapes of the internal cavity of sleeves of the module housing, front view.
Fig. 24 - head window from its external side with a cutout of a single window.
Fig. 25 - head window from its internal side with a cutout of a single window.

### Detailed Description of the Invention

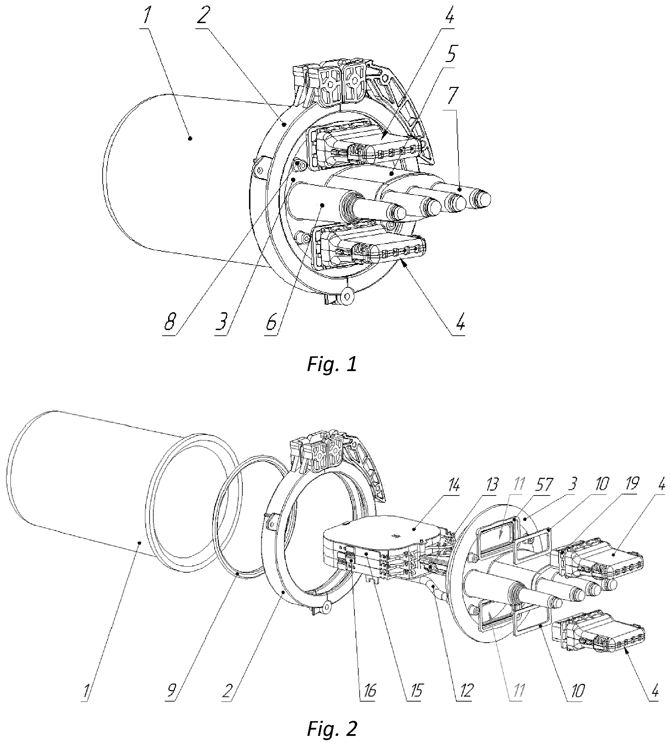

The fiber optic splice closure contains a hollow housing (Fig. 1) connected by the clamp 1 with the head 3 in a detachable manner. The head accommodates optical elements of the splice closure located in the housing.

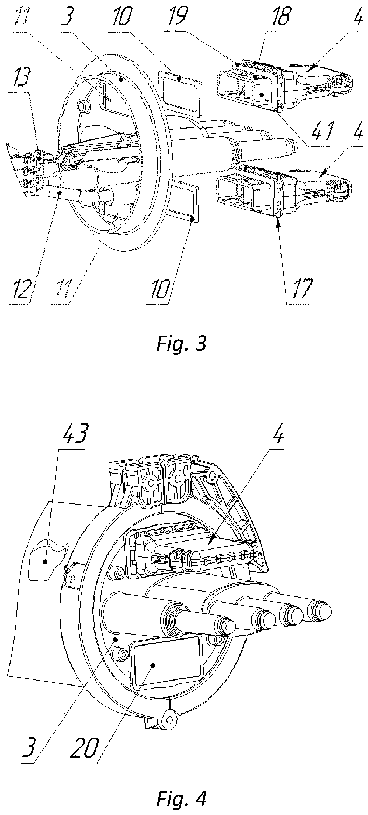

The clamp 2 is made of two halves and has a folding latch. The head accommodates at least one terminal module 4 (Fig. 4) to insert subscriber optical cables newly connected to the splice closure.

The head (Fig. 1) accommodates sleeves for inlet of optical distribution cables of communication lines on the outside: an oval sleeve 5 and a round sleeve 6, wherein the end of the oval sleeve accommodates three round sleeves 7 of a smaller diameter. Sealing of optical cables (not shown) in head sleeves is done by heat-shrink tubing (tubing is not shown).

The head 3 accommodates a pair of protrusions 8 to connect the head 3 of the splice closure with fasteners attaching the splice closure to the pole (not shown). Using the protrusions 8, the splice closure is secured on the support, for example, on the power line pole so that the housing 1 of the splice closure is located on the top and the head is under the housing. Preferably, the splice closure is attached to the pole in the working vertical position. Placing the splice closure in its working position facilitates the installation of the housing 1 on the head and its removal from the head. The splice closure housing protects its connection with the head and protects entries of optical cables into the splice closure against atmospheric precipitation.

To ensure a compact size of the splice closure and facilitate operation with it, the terminal modules 4 are located on the housing of the head 3 as shown in Fig. 1 - on opposite sides from the sleeves 6 and 7 of the head, wherein the length of each part of the module 4 protruding to the outside from the head is selected such that it does not exceed the length of each sleeve 6 and 7 mounted on the head and intended for accommodation of inlet and outlet optical cables in them.

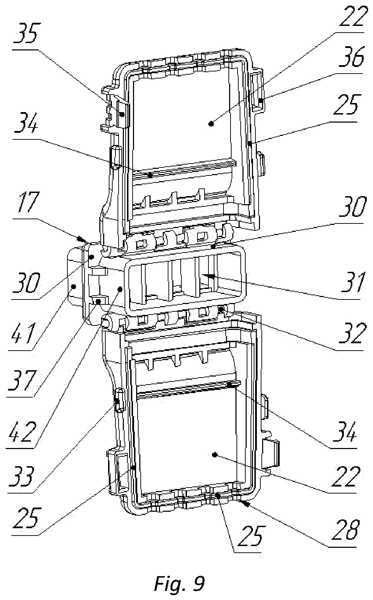

An elastic sealing gasket 9 (Fig. 9) of the splice closure housing is located between flanges of the housing 1 and head 3 (Fig. 2) for sealing of the joint between the housing and the head; an elastic sealing gasket 10 of the module housing is located between flanges of the housing of the terminal module 4 and the flange of the head 3. In this embodiment, two through windows 11 (Figs. 2, 3) made in the head wall for installation of two terminal modules 4 are located on the opposite sides from the round and oval sleeves 6 and 7. Each window 11 preferably has a rectangular shape corresponding to the shape of the terminal module housing. Each window 11 accommodates a hollow housing of the removable terminal module 4. The module housing has multiple elements forming its complicated volumetric shape. It is a separate removable part.

A bracket 12 (Fig. 2) for attaching the cartridge unit and elements 13 for attaching cables are installed inside the above-mentioned housing 1 of the splice closure, wherein a plate to attach cables is installed on the bracket 12 along with a cartridge unit 15 closed with a cover 14 on top, which are intended for storage of splices and reserve of optical fibers. Cartridges are attached to each into a unit by plastic loops 16 of the cartridge.

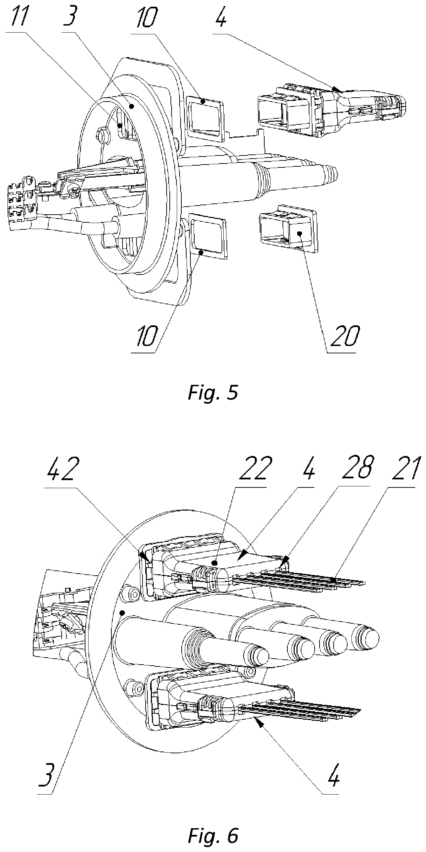

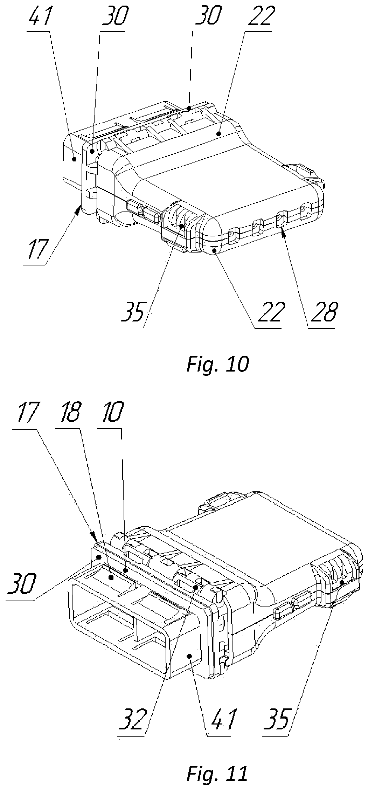

Latches 18 of the module (Fig. 11) are made on the protruding part of the housing 17 of the terminal module orientated towards the head 3 for attaching the housing 17 of the module in the window 11 of the head 3 and for connecting the housing with the head. The above-mentioned gasket 10 abuts the flange 19 (Fig. 3) of the rear part of the housing 17. The flange 19 and the gasket 10 ensure sealed abutment of the housing 17 of the module to the head flange. If the module 4 is not installed in the window 11 of the head, the window is closed with the blank 20 in a sealed manner (Fig. 4). If subscriber cables 21 (Fig. 10) are not connected to the terminal module, inlets to the module 4 are closed with blanks (not shown). If subscriber cables 21 are connected with the module 4, these cables are located in passages formed by slots 28 in covers 22 of the module (Fig. 6).

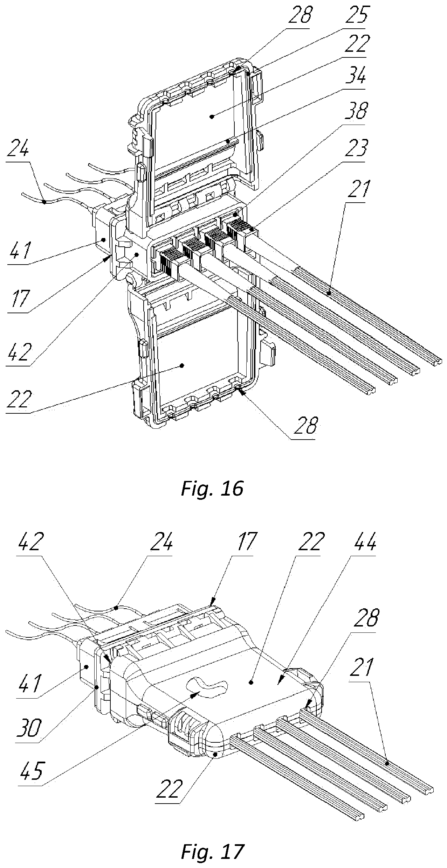

The housing 17 of the module 4 (Fig. 4) provides two rotary covers 22. In the closed position, the covers form a hollow housing of the terminal module with a sealed cavity for the accommodation of plugs 23 of optical connectors of subscriber cables connected with adapters located in the sockets of module housing sleeves described below. The plugs 23 of the subscriber cables 21 (Fig. 16) are connected with optical cables 24 of the splice closure.

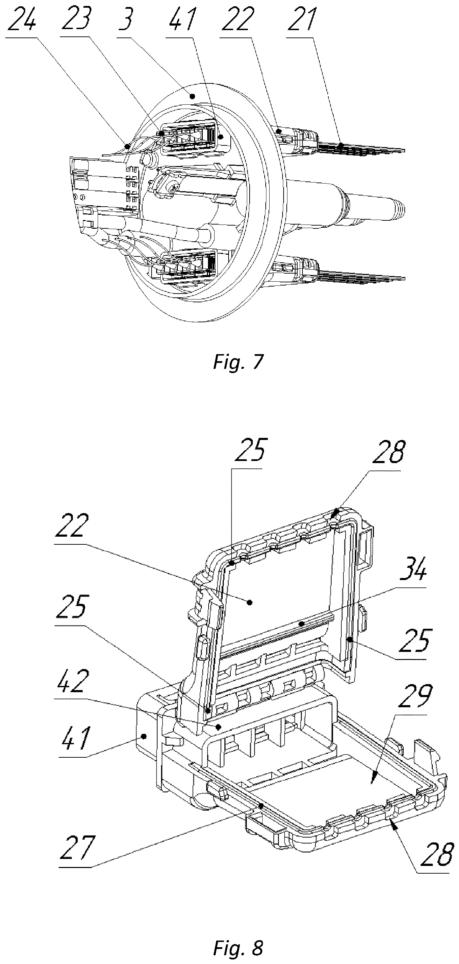

Elastic gaskets 25 are located in the first embodiment of the housing 26 of the module (Fig. 8) and in the second embodiment of the housing 17 of the module (Fig. 9). The sequence of the housing is shown conditionally.

To ensure the tightness of the cavity of the module housing 26 (Fig. 8), an elastic u-shaped gasket 27 is located in the u-shaped slot of the housing 26 of the module 4. For sealed inlet of the subscriber cables 21 into the housing 26 of the module, its cover 22 provides slots 28 that are also made in the basis 29 of the housing 26 as shown in Fig. 8. The gaskets 25 and 27 intersect the slots 28 and are compressed in the slots when the cover 22 is closed.

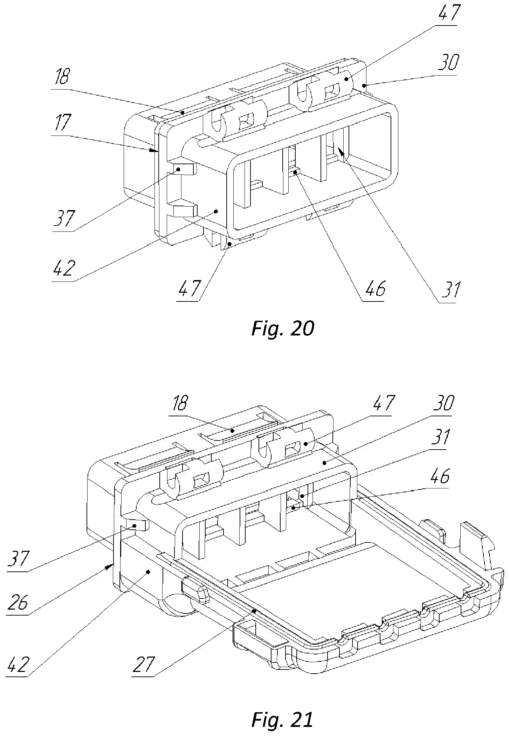

The housing 26 of the module (Fig. 8, 21) has a stepped configuration. In this embodiment of the housing 26, its upper rotary cover 22 is connected with the housing via an elastic gasket 25 of the cover. In this embodiment, the upper cover 22 in the working position is coupled with the basis 29 of the housing 26 acting as the lower cover. This basis 29 is made as a single unit with the housing 26 and is a continuation of this housing. This embodiment of the housing 26 provides only one rotary upper cover 22 with the stepped gasket 25 located in its slot. Since the basis 29 of the housing 26 is a continuation of the housing 26, the basis 29 is in the immovable position when the cover 22 is turned towards the basis and coupled with them.

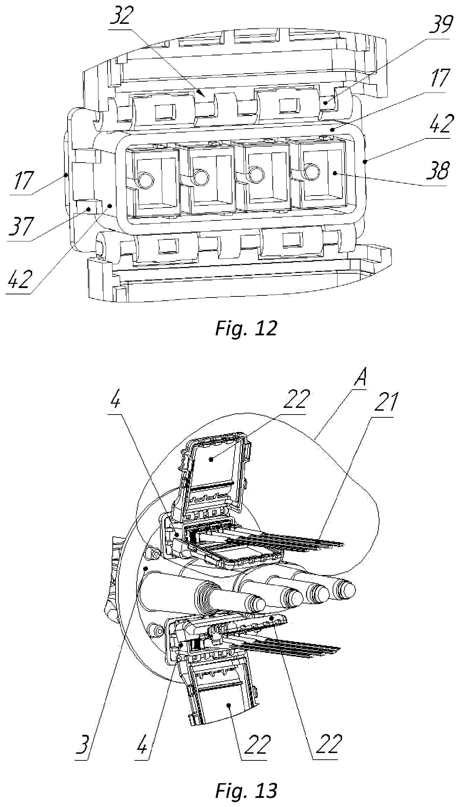

The gaskets 25 of two covers 22 of the housing 17 (Fig. 9) in the working position contact with each other and with the surface 30 of the module housing 17. Through sockets 31 are made in the housing 17 and divided by partitions on the part of the housing 17 on the opposite side from the latches 18 for installation of optical connectors and adapters 38 of optical connectors (Fig. 12). Each cover 22 of the housing 17 has a recess on the inner side along the perimeter where an elastic gasket 25 is located (Fig. 9). Each cover 22 is connected by a pivot 32 (Fig. 12) with any embodiment of the module housing.

Each cover 22 has a stop 33 (Fig. 9) for its retaining in the closed working position. Restricting ribs 34 are made on the inner surface of the covers 22 to limit the lateral movement of the plugs 23 of the subscriber cables 21 in the closed position of the covers 22 of the housing 17.

Each cover has a cover lock 35 (Fig. 10). A limiter 36 of the cover lock (Fig. 9) is located on its side opposite to the lock 35. The housing 17 and housing 26 have guides 37 (Fig. 20, 21) acting also as housing stiffening ribs.

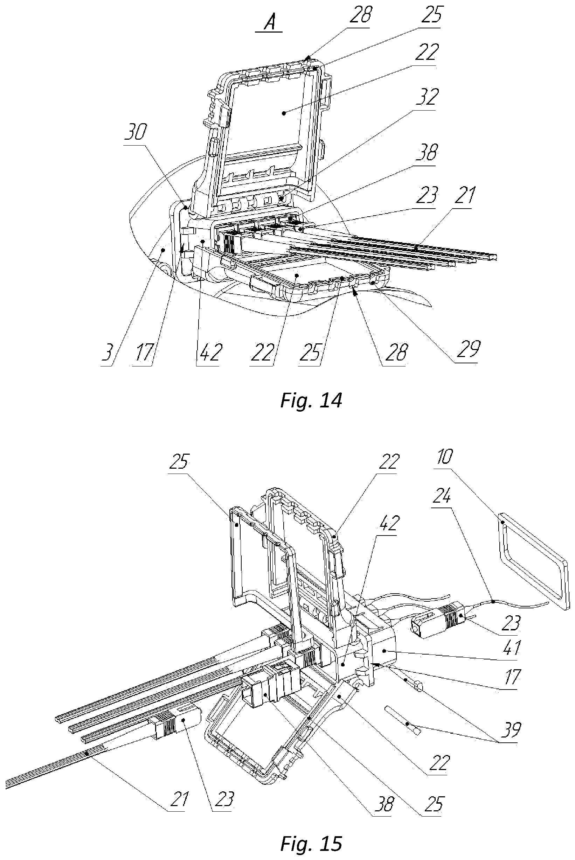

Each pivot 32 of the connection of each cover 22 with the housing 17 has eyes with holes in them where the removable axis 39 of the pivot is located (Fig. 15).

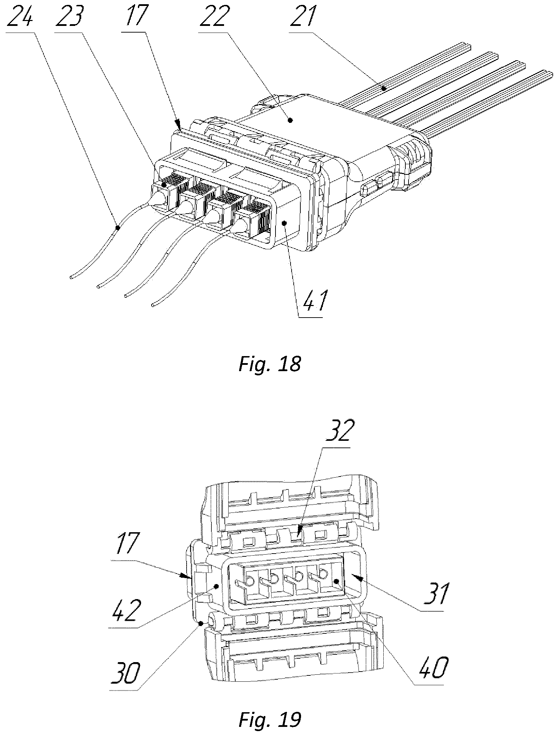

The above-mentioned adapter 38 (Figs. 12, 14) of the optical connector is a separate part that can be removed from the module, and it is connected with the module as shown in the drawing to facilitate installation. In one of the embodiments of the terminal module, a multiport adapter 40 of the optical connector (Fig. 19) is installed in its housing 17.

The housing 17 and housing 26 of the modules have oppositely oriented sleeves 41 and 42 (Figs. 8, 9). The above-mentioned through sockets 31 are made in these sleeves for the installation of adapters of optical connectors in them.

One sleeve 41 in the working position of the splice closure is located in the cavity 43 of the housing 1 of the splice closure (Figs. 4, 7) in the area of its head 4 on its inner side. This sleeve 41 communicates with the cavity 43 of the splice closure (Fig. 4) formed by the housing 1 and the head 3.

Another sleeve 42 (Fig. 6, 8) is located on the opposite external side of the head 3, and one cover 22 of the housing 26 or two covers 22 of the housing 17 are pivotally secured to this sleeve and form a hollow casing 44 in the closed position (Fig. 17) with a sealed cavity 45 formed by the covers 22 when they are closed. The cavity 45 of the casing 44 is formed by two recesses of the covers on their inner sides. Each cover in its cross-section is U-shaped.

The sleeve 42 located in the cavity 45 of the casing 44 (Figs. 16, 17) is used to accommodate in its sockets 31 the plugs of optical connectors of subscriber lines connected with the adapters 38 located in the sockets of the sleeves 41 and 42. The sleeves 41 and 42 are made as a single assembly with the module housing 17, wherein the sleeves are oppositely oriented relative to each other and located along the module. Their through sockets 31 for installation of adapters of optical connectors are also located along the module.

The cavity 45 of the casing 44 (Fig. 17) can accommodate subscriber lines of the cables 21 and plugs 23 of optical connectors newly connected to the splice closure that are connected with the cables 24 located in the splice closure via the adapters 38 located in the sockets 31 of the sleeves 41 and 42 (Figs. 16, 17).

A stop 46 is made in each socket 31 of the module housing 17 (Fig. 20) and module housing 26. Eyes 47 with holes for the axes 39 of the pivots 32 are made in the upper and lower parts of the housing 17 on the sleeve 42. The eyes 47 of the other housing 26 (Fig. 21) are made on the upper part of the housing of the sleeve 42.

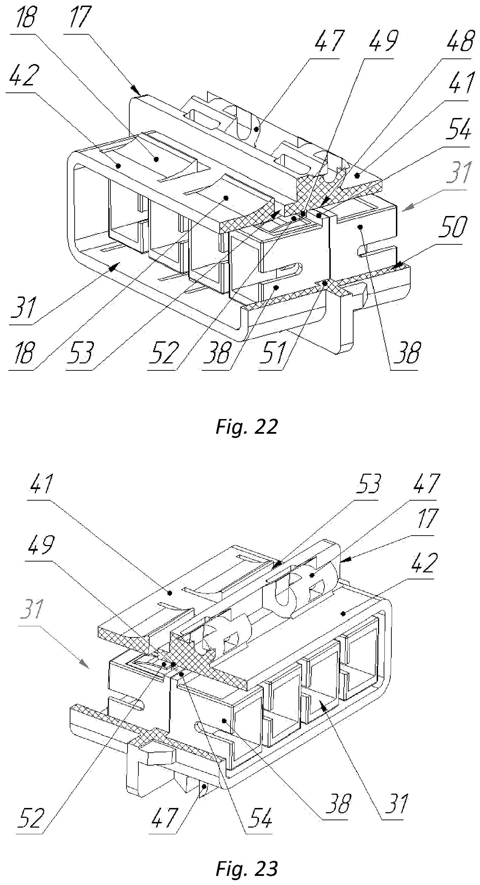

An upper stop 49 is made on the inner upper surface 48 of each housing of the module 4 (Figs. 22, 23), and a stop 51 is made on the side surface 50 of the housing. Each adapter 38 has a spring-loaded retainer 52 (Fig. 22) of the adapter to attach it in the working position in the housing socket 31. Access to each retainer is provided through the slot 52 made on the upper wall of the sleeve 42. A stop 54 is made on the upper part of each adapter 38, which interacts with the upper stop 49 of the housing 17 in the working position of the module.

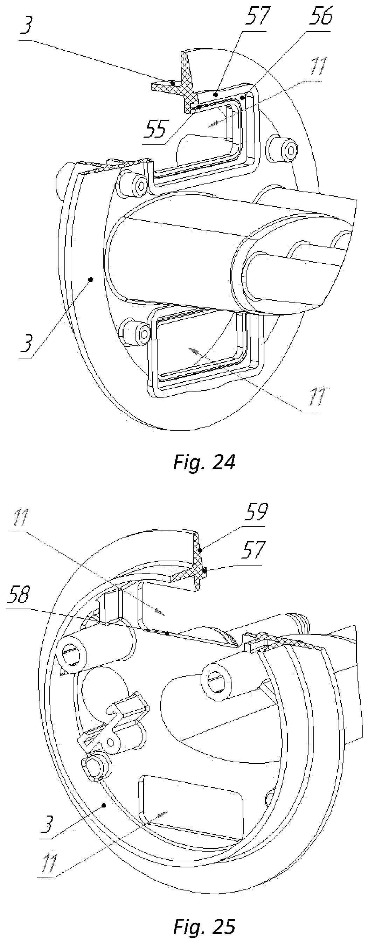

Each window 11 in the head 3 (Fig. 24) is framed by a closed protrusion 55, with a stop 56 made along the window perimeter inside it. A flange 57 is formed around each window 11. Opening of the window 11 is formed by the edge 58 (Fig. 25). The head 3 has a flange 59.

All the above-mentioned cables are optical with optical fiber bundles covered by insulation. All the above-mentioned plugs and optical connectors are intended for the connection of optical cables and are connected with respective splice closure elements in the working position of the splice closure.

The fiber optical splice closure is manufactured serially, with one window 11 or two windows (Fig. 2) simultaneously manufactured in the head wall and tightly closed by the blanks 20 (Fig. 4).

In the other embodiment of the splice closure, windows in the head are not made, but portions of the head where the modules 4 are suggested to be installed are scored so that scores designate the installation place of the window 11. During the installation of the splice closure at the communication line, if necessary, this place is cut by a tool along the marked score lines so as to produce the window 11 in the head wall in the specified location. After operations, the terminal module 4 is inserted into the window 11.

In the third embodiment of the splice closure, the terminal modules 4 are installed in windows 11 of the head 3 simultaneously during splice closure installation in the manufacturing conditions.

The splice closure is installed and brought to the working position at the construction site of the communication line. During installation, blanks of the sleeves 6 and 7 of the head 3 are cut off in the transverse direction in specified locations, heat-shrink tubing is placed on the cables (tubing and cables are not shown), cables are terminated using the adopted procedure and secured on the retainers 3 of the splice closure (Fig. 2). Then optical fibers of the distribution and internal connections cables 24 (Fig. 7) are seamed, and the reserve and splices of fibers are placed into the cartridges 15 (Fig. 2). Then heat-shrink tubing is heated and placed on the cables and sleeves 5, 6, and 7 of the head 3 (Fig. 1). The clamp 2 is closed and the housing 1 of the splice closure and the head 3 are secured in the connected working position. Then the splice closure is secured on the support in an inaccessible place or on the power line pole with the head oriented downwards in the working position of the splice closure. Cable reserve turns are placed near the splice closure on the support so that it is possible to remove the splice closure from the support if necessary and lower it on the ground for repair or replacement or for installation works intended to connect additional subscriber cables 21 to the communication line.

If it is required to connect subscribers to the optical communication line via the fiber optical splice closure when it is secured on the power line pole, one or two blanks 20 (Fig. 4) from the windows 11 are removed, and the terminal modules 4 are installed in the windows. Each module 4 is installed in the window 11 of the splice closure head 3 on the splice closure installed in the working position, the cavity 43 of which provides a pre-mounted plug 23 of optical connectors (Fig. 14) connected with the cables 24 of the splice closure that are also located in the cavity 43 of the splice closure (Fig. 4).

To connect a subscriber to the optical communication line via the optical splice closure, the blank (not shown) is removed from the slots 28, the covers 22 of the module 4 are opened (Fig. 14), and the plug of the subscriber cable 21 is inserted into a respective socket 31 of the sleeve 42. The subscriber optical cable 21 is connected with the optical adapter 38 located in the socket 31 of the sleeve 42. Since the adapter 38 is optically connected with the plug 23 of the optical cable 24, there is an optical connection of the subscriber cable 21 with the optical cable 24 located in the cavity of the splicer closure without opening it and removing the head 3 with the splice closure housing.

It is possible to connect the subscriber cables 21 to such a splice closure that is manufactured without preparation for the connection of subscriber cables to it. In this case, to connect the subscriber cable 21, the following actions are undertaken. The lever of the clamp 2 (Fig. 1) is moved to the non-operating position, and the lever 12 is removed from the housing 1 with the cartridge unit 15 secured to it. Windows 11 are made in the head 3 (Fig. 5) and the modules 4 are installed in them. Adapters 38 (Fig. 13) are installed in the sockets 31 (Fig. 9). When installing the modules 4 in the head holes, the elastic gaskets 10 are compressed, the latches 18 are latched, and the modules are reliably and tightly fixed in the working position on the head.

When installing, the connecting cables 24 (Fig. 7) terminated with the plugs 23 are placed and secured on the bracket 12 (Fig. 2), then the cables 24 are connected to the adapters 38 on the inner side of the head (Fig. 7). After connecting the plugs 23 of the cables 24 to the adapters 38 of the module, the gasket 9 is installed on the head 3 of the splice closure and the head is connected with the housing by the splice closure clamp 2. Then the external subscriber lines 21 (Fig. 15) are connected via the plugs 23 to the adapters 38 of the module on the inner side of the splice closure. After connecting the cables 21 to the adapters 38, the covers 22 of the module 4 are closed and removed, the locks 35 are latched (Fig. 10), the gaskets 25 of covers 22 are used to compress the cables 21 along the perimeter in the slots 28 of the covers 22, and the cables 21 are sealed in the passage of the terminal module 4 (Fig. 16).

During operation of the splice closure, if it becomes necessary to connect new subscriber users to the optical communicational line, the covers 22 of one or each terminal module are switched from the working closed position to the opened mounting position (Fig. 12), then the optical adapters 38 are installed in sockets 31 (Figs. 11-13). The number of installed adapters may not equal the number of sockets and some of them may remain free for other connections. Optical connectors are connected to the plugs 23 on the outer side of the housing (Fig. 13), and they are connected with the respective adapters 38 that are coupled with the plugs 23 of optical connectors of the subscriber optical cables 21.

The covers 22 are then brought to the working position closing them to each other, protective shells of the subscriber optical cables 21 are pinched by the elastic gaskets 25 in passages between the covers, then the latches of the covers 22 are latched (Fig. 2).

If the number of subscriber cables connected using a terminal module is fewer than the number of passages in the cover, blind cylindrical blanks (not shown) are inserted into free passages of modules formed by the slots 28 of the covers 22, the diameter of which corresponds to the jacket diameter of subscriber optical cables.

If access is needed to the cartridges 15 of the splice closure, the clamp 21 is opened by a lever latch, the head 3 of the splice closure is released, the head and cartridges 15 secured on its bracket 12 are removed from the housing 1 of the splice closure, the loop 16 is removed, the necessary cartridge 15 is released, and, with opened covers 22 of the module, all necessary known installation works are done to connect those splice closure elements with module elements that must be connected to each other. Access is provided to all optical connectors of the splice closure and to all splice closure elements simultaneously with one or two covers 22 of the module housing opened, and access is provided to all cartridges 15 of the splice closure, which significantly reduces the labor intensity of installation and removal works on communication lines.

Installation of the module 4 in the window 11 of the splice closure is done as follows. The gasket 10 is put on the sleeve 41 (Fig. 3) of the module, the module 4 is moved towards the head 3, and the sleeve 42 of the module is inserted into the window 11 until the flange 19 (Fig. 3) of the rear part of the module 4 housing bumps into the head 3 wall. The elastic gasket is compressed, elastic latches go into the window 11, interact with the edge 58 (Fig. 25), and are latched on the inner side of the head. The flange 57 is pressed to the module flange 19 and the gasket bumps into the stop 56 located around the window 11.

The adapters 38 (Fig. 22) in the sockets 31 of the module housing 17 are installed as follows. At first, the left adapter 38 (Fig. 22) is inserted into the socket 31 until the adapter stop 54 touches the upper stop 49 of the housing 17. The spring retainer 52 is compressed, goes under the stop 49, is latched, and bumps into the stop 49 of the housing 17 on the inner side of the head oriented to the splice closure housing 1. During installation, the right adapter 17 (Fig. 22) is inserted on the outer side of the housing 17 to the socket 31, with which the plug 23 of the subscriber cable 21 is connected (Fig. 14). After crimping the cable 21 in the passage between the sockets 28 by the covers 22, the right adapter 38 (Fig. 22) is secured in the working position in the socket 31.

The splice closure operates as follows. Optical signals moving along the inlet cable at nearly the speed of light in vacuum go to optical fibers of the cartridges 15 (Fig. 2) via the inlet optical cable (not shown) located in the sleeve 6 of the head (Fig. 1), whence they go out of the coupling under the pre-defined scheme through the optical cables 24 (Fig. 7), via the plugs 23 and adapter 38 (Fig. 14). Optical signals are then supplied via the subscriber cables 21 to the communication line subscriber.

The splice closure design allows the use of the outer surface of the splice closure head from the outer side of the splice closure to install the terminal module in it for passage of subscriber cables and facilitating operations required to connect subscribers to the splice closure without opening the splice closure.

The splice closure with windows in its head for installation of terminal modules in it, with plugs of optical connectors located in the cavity of each of them, significantly facilitates installation and removal and reduces their labor intensity.

Covers of each terminal module can be pivotally or otherwise secured on the module casing. The module housing can accommodate a variable number of connectors, each of which can be single or multi-adapter.

In combination with terminal modules installed in the head, the splice closure can have several embodiments: with two rotary covers of each terminal module or with a single rotary cover relative to the module housing, as well as with single optical connectors installed in the module housing or with a multi-adapter optical connector installed in the module housing or in various other possible combinations.

The design of the terminal module, part of which is located in a sealed manner in the splice closure head with adapters of optical connectors installed in it, allows the connection of subscriber cables terminated by connectors without opening the splice closure housing to fibers of optical cables mounted in the splice closure, which facilitates the connection and maintenance and reduces the labor intensity of installation works.

The design of the terminal module also provides for accommodation of a single multi-port adapter in the same housing instead of multiple adapters of individual single-port modules, which significantly facilitates and reduces the labor intensity of installation works. Using this terminal module in the fiber optical splice closure makes it compact. In the case of installing single or several modules in the splice closure head, the splice closure dimensions are not increased.

## Claims

1. A terminal module (4) for a fiber optic splice closure, the terminal module comprising a housing (17) with oppositely oriented nozzles (41, 42) and sockets (31) in said nozzles for adapters (38), **characterised in that** the terminal module further comprises a the housing (17) flange for connection with a head (3) flange, a housing basis (29) stretching from the housing (17), and a cover (22) closing the basis (29) in a sealed manner forming a sealed cavity (45) of a casing (44) together with the basis (29) and housing (17) with passages in the casing (44) for subscriber cables (21).

2. The terminal module (4) according to claim 1, **characterized in that** the cover (22) is pivotally connected with one of the housing nozzles (41, 42).

3. A terminal module for a fiber optic splice closure, the terminal module comprising a housing (26) with oppositely oriented nozzles (41, 42) and sockets (31) in said nozzles for adapters (38), **characterised in that** the terminal module further comprises a housing (26) flange for connection with a head (3) flange, and a pair of covers (22) attached to each other in a sealed manner connected with the housing (26) forming a sealed cavity (45) of a casing (44) together with the housing (26), with passages in the casing (44) for subscriber cables (21).

4. The terminal module (4) according to claim 3, **characterized in that** the covers (22) are pivotally connected with one of the housing nozzles (41, 42).

5. A fiber optical splice closure comprising the terminal module (4) of any of claims 1-4.

## Patentansprüche

1. Anschlussmodul (4) für einen faseroptischen Spleissverschluss, wobei das Anschlussmodul (4) aus einem Gehäuse (17) mit entgegengesetzt ausgerichteten Stutzen (41, 42) und Buchsen (31) in den Stutzen (41, 42) für Adapter (38) besteht und sich **dadurch kennzeichnet, dass** das Anschlussmodul ferner einen Gehäuseflansch (17) zur Verbindung mit einem Kopfflansch (3) umfasst, eine Gehäusebasis (29), die sich von dem Gehäuse (17) aus erstreckt, und einen Deckel (22), der die Gehäusebasis (29) dicht verschließt und zusammen mit der Gehäusebasis (29) und dem Gehäuseflansch (17) einen abgedichteten Hohlraum (45) mit Durchgängen in der Ummantelung (44) für Teilnehmerleitungen (21) bildet.

2. Anschlussmodul (4) gemäß Patentanspruch 1, **dadurch gekennzeichnet, dass** der Deckel (22) mit einem der Gehäusestutzen (41, 42) schwenkbar verbunden ist.

3. Anschlussmodul für einen faseroptischen Spleissverschluss, wobei das Anschlussmodul aus einem Gehäuse (26) mit entgegengesetzt ausgerichteten Stutzen (41, 42) und Buchsen (31) in den Stutzen für Adapter (38) besteht, die sich dadurch kennzeichnen, dass das Anschlussmodul ferner einen Gehäuseflansch (26) zur Verbindung mit einem Kopfflansch (3) und ein Paar von Abdeckungen (22) umfasst, die in abgedichteter Weise aneinander befestigt und mit dem Gehäuse (26) verbunden sind, und einen abgedichteten Hohlraum (45) mit Durchgängen in der Ummantelung (44) für Teilnehmerleitungen (21) bilden.

4. Anschlussmodul (4) gemäß Patentanspruch 3, **dadurch gekennzeichnet, dass** die Deckel (22) mit einem der Gehäusestutzen (41, 42) schwenkbar verbunden sind.

5. Faseroptischer Spleissverschluss mit Anschlussmodul (4) gemäß einem der Patentansprüche 1-4.

## Revendications

1. Module de connexion (4) destiné à une obturation d'épissure de fibres optiques, le module de connexion (4) comprenant un logement (17) avec des embouts (41, 42) et cavités (31) dans lesdits embouts (41, 42), orientés de manière opposée pour des adaptateurs (38), **caractérisé en ce que** le module de connexion comprend en outre une bride du logement (17) pour une liaison à une bride de tête (3), une base (29) de logement s'étendant à partir du logement (17), et un couvercle (22) obturant la base (29) de manière étanche, formant une cavité étanche (45) conjointement avec la base (29) et le logement (17) avec des passages dans le boîtier (44) pour des câbles d'abonnés (21).

2. Module de connexion (4) selon la revendication 1, **caractérisé en ce que** le couvercle (22) est relié de manière pivotante à l'un des embouts (41, 42) de logement.

3. Module de connexion destiné à une obturation d'épissure de fibres optiques, le module de connexion comprenant un logement (26) avec des embouts (41, 42) et cavités (31) dans lesdits embouts, orientés de manière opposée pour des adaptateurs (38), **caractérisé en ce que** le module de connexion comprend en outre une bride du logement (26) pour une liaison à une bride de tête (3) et une paire de couvercles (22) fixés l'un à l'autre de manière étanche, reliés au logement (26), formant une cavité étanche (45) d'un boîtier (44) conjointement avec le logement (26), avec des passages dans le boîtier (44) pour des câbles d'abonné (21).

4. Module de connexion (4) selon la revendication 3, **caractérisé en ce que** les couvercles (22) sont reliés de manière pivotante à l'un des embouts (41, 42) de logement.

5. Obturation d'épissure de fibres optiques comprenant le module de connexion (4) selon l'une quelconque des revendications 1 à 4.
